# EUROPEAN PATENT APPLICATION

(11) **EP 4 848 558 A1**
(43) Date of publication of application: **02.12.2026**
(21) Application number: 24925468.1
(22) Date of filing: 27.08.2024
(51) Int. Cl.: H02M 7/42, H04B 3/54

(54) **POWER CONVERTER AND PHOTOVOLTAIC POWER GENERATION SYSTEM**

(30) Priority: 19.02.2024 CN 202410188806
(71) Applicant: Huawei Digital Power Technologies Co., Ltd., Shenzhen, Guangdong 518043 (CN)
(72) Inventor: HUANG, Jingjing, Shenzhen, Guangdong 518043 (CN); WANG, Zhenyu, Shenzhen, Guangdong 518043 (CN); SHUI, Wei, Shenzhen, Guangdong 518043 (CN); ZHANG, Chunqing, Shenzhen, Guangdong 518043 (CN)
(74) Representative: Huawei European IPR
(86) International application number: PCT/CN2024/114830
(87) International publication number: WO 2025/175727

(57) **Abstract**

This application provides a power converter and a photovoltaic generation system, applied to the field of power line communication (PLC) technologies, to improve signal quality of a PLC signal in the photovoltaic generation system, thereby increasing a transmission distance of the PLC signal. The power converter includes an inverter circuit and a noise cancellation circuit. A direct-current power supply is connected to a power transmission line through the inverter circuit. An input terminal of the noise cancellation circuit is connected to a target coupling point of the power transmission line, and at least one group of reference signal input terminals of the noise cancellation circuit is connected to at least one group of corresponding sampling points. Each group of sampling points in the at least one group of sampling points is disposed on a coupling path between the target coupling point and a three-phase alternating-current output terminal. The noise cancellation circuit is configured to: receive a first communication signal from the target coupling point; and perform noise cancellation processing on the first communication signal based on at least one reference signal obtained from the at least one group of sampling points, to obtain a noise-reduced second communication signal.

## Description

This application claims priority to Chinese Patent Application No. 202410188806.1, filed with the China National Intellectual Property Administration on February 19, 2024 and entitled "POWER CONVERTER AND PHOTOVOLTAIC GENERATION SYSTEM", which is incorporated herein by reference in its entirety.

### TECHNICAL FIELD

This application relates to the field of power line communication technologies, and in particular, to a power converter and a photovoltaic generation system.

### BACKGROUND

A power line communication (power line communication, PLC) technology is a technology that uses a power transmission line as a communication channel. In a photovoltaic generation system, photovoltaic power generation and power supply are implemented based on a plurality of components (for example, a photovoltaic power generation panel, a photovoltaic optimizer, a power converter, a transformer, and a data collector). Exchange of communication signals (including collected device state information, delivered device state control instructions, and the like) can be performed based on PLC between the plurality of components (for example, between the photovoltaic optimizer and the power converter, and between the power converter and the data collector) of the photovoltaic generation system. As power of a photovoltaic power station increases, a scale of the photovoltaic power station also increases. This imposes higher requirements for a communication distance of a PLC signal. In a photovoltaic generation system, an inverter circuit in a power converter generates significant noise, which severely affects receiving of a PLC signal within the power converter, thereby affecting a transmission distance of the PLC signal. Therefore, to increase the transmission distance of the PLC signal, noise reduction needs to be performed on the PLC signal within the inverter. However, an existing noise reduction manner has a poor noise reduction effect, and is not conducive to transmission of a PLC signal for a longer distance. Therefore, a solution needs to be provided to resolve the foregoing problem.

### SUMMARY

Embodiments of this application provide a power converter and a photovoltaic generation system to improve signal quality of a PLC signal in the photovoltaic generation system, thereby increasing a transmission distance of the PLC signal.

To resolve the foregoing problem, this application provides the following technical solutions.

According to a first aspect, a power converter is provided, where the power converter includes an inverter circuit and a noise cancellation circuit. A direct-current input terminal of the inverter circuit is configured to be connected to a direct-current power supply. A three-phase alternating-current output terminal of the inverter circuit is configured to be connected to a power transmission line. An input terminal of the noise cancellation circuit is connected to a target coupling point of the power transmission line, and at least one group of reference signal input terminals of the noise cancellation circuit is connected to at least one group of corresponding sampling points. Each group of sampling points in the at least one group of sampling points is disposed on a coupling path between the target coupling point and the three-phase alternating-current output terminal. The noise cancellation circuit can receive a first communication signal from the target coupling point. Then the noise cancellation circuit performs noise cancellation processing on the first communication signal based on at least one reference signal obtained from the at least one group of sampling points, to obtain a noise-reduced second communication signal.

In a photovoltaic generation system, a coupling path between an inverter circuit within a power converter and a target coupling point of a power communication apparatus on a power transmission line is prone to generating significant noise. When the power communication apparatus communicates with a data collector or a photovoltaic optimizer through a PLC signal, the noise causes severe interference to receiving of the PLC signal, thereby affecting a transmission distance of the PLC signal. In embodiments of this application, at least one group of sampling points is disposed on the coupling path between the target coupling point of the power communication apparatus on the power transmission line and the three-phase alternating-current output terminal of the inverter circuit. At least one group of reference signal input terminals of the noise cancellation circuit is connected to at least one group of corresponding sampling points. The noise cancellation circuit can receive the first communication signal from the target coupling point, and obtain at least one reference signal from the at least one group of sampling points through the at least one group of reference signal input terminals. Then the noise cancellation circuit performs noise cancellation processing on the first communication signal based on the at least one reference signal, to obtain a noise-reduced second communication signal. In the foregoing manner, a plurality of reference signals can be obtained from the coupling path to perform noise cancellation processing on the first communication signal received at the target coupling point, thereby filtering out a noise signal generated by a noise source on the coupling path to obtain the second communication signal, so as to increase a signal-to-noise ratio of a wanted signal in the second communication signal. Based on this, even if a transmission distance of the PLC signal is long, the signal-to-noise ratio of the wanted signal in the communication signal can be increased with reference to the foregoing manner, thereby increasing the transmission distance of the PLC signal.

In a possible implementation, a quantity of the at least one group of sampling points is determined based on a quantity of noise sources on the coupling path. Determining the quantity of sampling points based on the quantity of noise sources on the coupling path allows for more comprehensive noise cancellation processing of the first communication signal at the target coupling point through the reference signal, so that a signal-to-noise ratio of a wanted signal in the second communication signal is higher.

In a possible implementation, the noise source includes at least one of a differential mode inductor, a common mode inductor, or a switching device disposed on the coupling path. The differential mode inductor, the common mode inductor, the switching device, or the like disposed on the coupling path between the inverter circuit within the power converter and the target coupling point of the power communication apparatus on the power transmission line may generate a noise signal. Therefore, the noise source on the coupling path can be determined based on the foregoing components.

In a possible implementation, the at least one group of sampling points is disposed at the noise source. The sampling points are disposed at the noise source, so that a noise signal included in the reference signal can be closer to a real noise signal. When the reference signal is used to perform noise cancellation processing on the first communication signal at the target coupling point, a noise signal in the first communication signal can be better removed, thereby increasing the signal-to-noise ratio of the wanted signal in the second communication signal.

In a possible implementation, the noise cancellation circuit includes an operational circuit and a sampling circuit. An input terminal of the operational circuit is connected to the target coupling point and the at least one group of sampling points through the sampling circuit. Through the sampling circuit, signals at the target coupling point and the at least one group of sampling points can be converted from digital to analog, and then processed through the operational circuit, which can reduce interference and errors, thereby improving accuracy of operation.

In a possible implementation, the sampling circuit includes a first sampling sub-circuit, a second sampling sub-circuit, and a third sampling sub-circuit; an input terminal of the first sampling sub-circuit, serving as a first reference signal input terminal, is connected to a group of sampling points disposed close to the three-phase alternating-current output terminal in the at least one group of sampling points; an input terminal of the second sampling sub-circuit, serving as a second reference signal input terminal, is connected to a group of sampling points disposed close to the target coupling point in the at least one group of sampling points; both an output terminal of the first sampling sub-circuit and an output terminal of the second sampling sub-circuit are connected to the operational circuit; and the target coupling point is connected to the operational circuit through the third sampling sub-circuit. In the foregoing manner, noise cancellation processing can be performed on the first communication signal through a reference signal of a group of sampling points disposed close to the three-phase alternating-current output terminal on the coupling path and a reference signal of a group of sampling points disposed close to the target coupling point.

In a possible implementation, the first sampling sub-circuit, the second sampling sub-circuit, and the third sampling sub-circuit each include a low-pass filter and a digital-to-analog converter that are cascaded. Low-pass filtering processing can be performed on signals sampled by the three sampling circuits through the low-pass filter, thereby improving signal quality and enabling a subsequent processing result to be more accurate.

In a possible implementation, the low-pass filter is a low-pass filter provided with an isolation circuit. Through the low-pass filter provided with the isolation circuit, interference from a signal on the coupling path to a signal in the operational circuit can be avoided, thereby improving reliability of the noise cancellation circuit in performing noise cancellation on the first communication signal.

In a possible implementation, the noise cancellation circuit further includes a pulse suppression circuit. An input terminal of the pulse suppression circuit is connected to an output terminal of the operational circuit. The pulse suppression circuit can be configured to eliminate a pulse signal whose strength exceeds a strength threshold in the second communication signal to obtain a third communication signal. In the foregoing manner, the pulse signal whose strength exceeds the strength threshold in the second communication signal can be eliminated, thereby eliminating interference from a high-strength pulse signal to improve accuracy and reliability of a subsequent processing result.

In a possible implementation, the power converter further includes a coupler. The input terminal of the noise cancellation circuit is connected to the target coupling point through the coupler, or the coupler is connected to an output terminal of the noise cancellation circuit.

In a possible implementation, the power converter further includes a power communication apparatus, the noise cancellation circuit is disposed within the power communication apparatus, and the input terminal of the noise cancellation circuit, serving as an input terminal of the power communication apparatus, is connected to the target coupling point of the power transmission line. In the foregoing manner, the noise cancellation circuit can be implemented as an on-chip circuit to improve an integration level of the power converter and reduce a routing area.

In a possible implementation, the power converter further includes a power communication apparatus, and the output terminal of the noise cancellation circuit is connected to an input terminal of the power communication apparatus. The power communication apparatus can be configured to process the second communication signal. In the foregoing manner, the noise cancellation circuit may be disposed as an independent circuit at the target coupling point and the input terminal of the power communication apparatus, which facilitates a targeted design of the noise cancellation circuit based on an actual requirement.

According to a second aspect, a photovoltaic generation system is provided. The photovoltaic generation system includes one or more power converters according to any of the possible implementations in the first aspect and a data collector. The one or more power converters are configured to communicate with the data collector through the power transmission line.

According to a third aspect, a photovoltaic generation system is provided. The photovoltaic generation system includes the power converter according to any of the possible implementations in the first aspect and one or more photovoltaic optimizers. The power converter is configured to communicate with the one or more photovoltaic optimizers through the power transmission line, and each photovoltaic optimizer in the one or more photovoltaic optimizers is configured to be connected to a photovoltaic power generation panel.

For technical principles and beneficial effects of the second aspect and the third aspect, reference can be made to related descriptions of the first aspect. Details are not described herein again.

### BRIEF DESCRIPTION OF DRAWINGS

FIG. 1 is a diagram of a structure of a photovoltaic generation system;
FIG. 2 is a diagram of a principle of an adaptive noise cancellation algorithm;
FIG. 3 is a diagram 1 of a structure of a power converter according to an embodiment of this application;
FIG. 4 is a diagram 2 of a structure of a power converter according to an embodiment of this application;
FIG. 5 is a diagram of a principle of a noise cancellation circuit according to an embodiment of this application;
FIG. 6 is a diagram of a principle of another noise cancellation circuit according to an embodiment of this application;
FIG. 7 is a diagram 3 of a structure of a power converter according to an embodiment of this application;
FIG. 8 is a diagram 4 of a structure of a power converter according to an embodiment of this application;
FIG. 9 is a diagram of a principle of still another noise cancellation circuit according to an embodiment of this application;
FIG. 10 is a diagram 5 of a structure of a power converter according to an embodiment of this application;
FIG. 11 is a diagram 6 of a structure of a power converter according to an embodiment of this application; and
FIG. 12 is a diagram of a noise reduction result after noise reduction is performed on different quantities of reference signals according to an embodiment of this application.

### DESCRIPTION OF EMBODIMENTS

The following describes the technical solutions in embodiments of this application with reference to the accompanying drawings in embodiments of this application.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, in embodiments of this application, words such as "first" and "second" do not limit a quantity and a sequence.

It should be noted that in this application, the words such as "example" or "for example" are used to represent giving an example, an illustration, or a description. Any embodiment or design scheme described as "example" or "for example" in this application should not be explained as being more preferred or having more advantages than another embodiment or design scheme. Exactly, use of the word like "example" or "for example" is intended to present a related concept in a specific manner. Terms such as "connection" and "coupling" involved in embodiments of this application should be understood in a broad sense. For example, the terms such as "connection" and "coupling" may refer to a physical direct connection, or may refer to an indirect connection implemented by using an electronic component, for example, a connection implemented by using a resistor, an inductor, a capacitor, or another electronic component.

The following describes this application in detail with reference to the accompanying drawings and embodiments.

A power line carrier (power line carrier, PLC) communication technology is a technology that uses a power transmission line as a communication channel. The technology modulates an analog or digital signal onto the power transmission line by using carrier waves for transmission, to implement interactive communication between a plurality of nodes based on the power transmission line. Typical PLC communication is point-to-multipoint (point to multiple point, P2MP) wired communication, that is, a central control master node (central controller, CCO) and a plurality of communication sub-nodes (station, STA) are disposed in a PLC communication system. The plurality of communication sub-nodes can separately communicate with the central control master node. The plurality of communication sub-nodes can alternatively communicate with each other based on the central control master node. As a highly efficient and stable communication mode, PLC can not only transmit a signal over a long distance, but also have high transmission efficiency, good reliability, and confidentiality, and is applicable to many practical applications. PLC full-duplex communication can greatly improve spectral efficiency of PLC, but a PLC full-duplex communication system requires high-isolation radio frequency components and circuits.

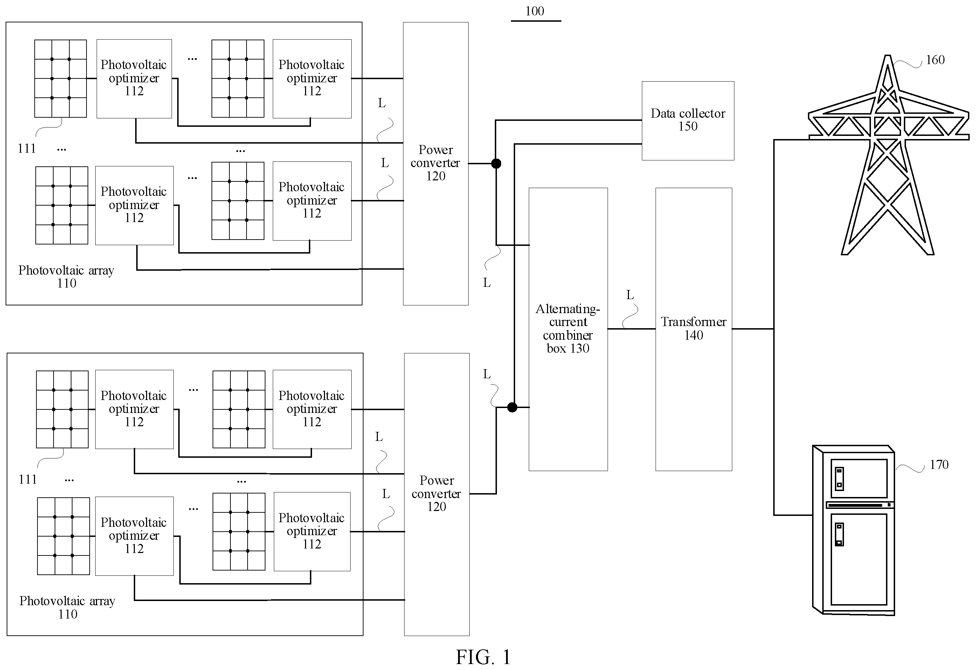

A photovoltaic generation system (photovoltaic generation system, PGS) is a power generation system that directly converts solar radiation energy into electric energy by using photovoltaic effect of a semiconductor material. As shown in FIG. 1, a photovoltaic generation system 100 includes a photovoltaic array 110, a power converter 120, a transformer 140, and a data collector 150. In addition, the photovoltaic generation system further includes a power grid 160 or a load 170. The photovoltaic array 110 includes a plurality of photovoltaic power generation panels 111 and a plurality of photovoltaic optimizers 112. Each photovoltaic power generation panel 111 in the plurality of photovoltaic power generation panels 111 is correspondingly connected to one photovoltaic optimizer 112 in the plurality of photovoltaic optimizers 112. The plurality of photovoltaic optimizers 112 are separately connected to the power converter 120 through power transmission lines L. A plurality of power converters 120 are separately connected to the data collector 150 and an alternating-current combiner box 130 through power transmission lines L, and the alternating-current combiner box 130 is connected to the transformer 140. The transformer 140 is connected to the power grid 160 or the load 170 through a power transmission line L.

The photovoltaic power generation panel 111 is configured to convert solar radiation energy into a direct current. The photovoltaic optimizer 112 is configured to detect working state information, such as a working power, of a corresponding photovoltaic power generation panel 111, convert an input low-current direct current to obtain a high-current direct current, and transmit the obtained high-current direct current to the power converter 120. The power converter 120 is configured to: perform direct-current voltage-boosting processing on an input direct current, perform inversion processing on the direct current obtained after the direct-current voltage-boosting processing to obtain an alternating current, and provide the alternating current to the alternating-current combiner box 130. The power converter 120 is further configured to obtain, through sampling, power information, current information, voltage information, and the like of an input direct current and/or an output alternating current. Each alternating-current combiner box 300 combines an input alternating current and then provides the combined alternating current to the transformer 140. After performing voltage transformation processing on the input alternating current, the transformer 140 provides the power grid 160 or the load 170 with the alternating current obtained after the voltage transformation processing. The data collector 150 is configured to record working state information of the power converter 120, and the like. In an example, the power converter 120 may be an inverter.

For example, in the embodiment of FIG. 1, each photovoltaic optimizer 112 is disposed as a power converter of an STA, and the power converter 120 is disposed as a power converter of a CCO. Service information may be communicated based on a PLC technology between the photovoltaic optimizer 112 and the power converter 120. For example, the photovoltaic optimizer 112 may transmit working information such as a voltage, a current, a temperature, and a working power of the photovoltaic power generation panel 111 to the power converter 120 by using the PLC technology. The power converter 120 can also issue control instruction information to different photovoltaic optimizers 112 based on the PLC technology, for example, a maximum power point tracking (maximum power point tracking, MPPT) control instruction and a conduction control instruction.

For example, a power converter serving as an STA may be disposed in the power converter 120, and a related component is disposed within a box body of the transformer 140 or a related component is disposed within the data collector 150 to serve as a power converter of the CCO. Service information can be communicated by using the PLC technology between the plurality of power converters 120 and the data collector 150. For example, the power converter 120 transmits power information, current information, voltage information, and the like that are obtained through sampling to the data collector 150 based on the PLC technology, and the data collector 150 may also send control instruction information to a corresponding power converter 120 based on the PLC technology. However, in a photovoltaic generation system, a coupling path between an inverter circuit within a power converter 120 and a target coupling point of a power communication apparatus on a power transmission line is prone to generating significant noise. When the power communication apparatus communicates with a data collector or a photovoltaic optimizer through a PLC signal, the noise causes severe interference to receiving of the PLC signal, thereby affecting a transmission distance of the PLC signal.

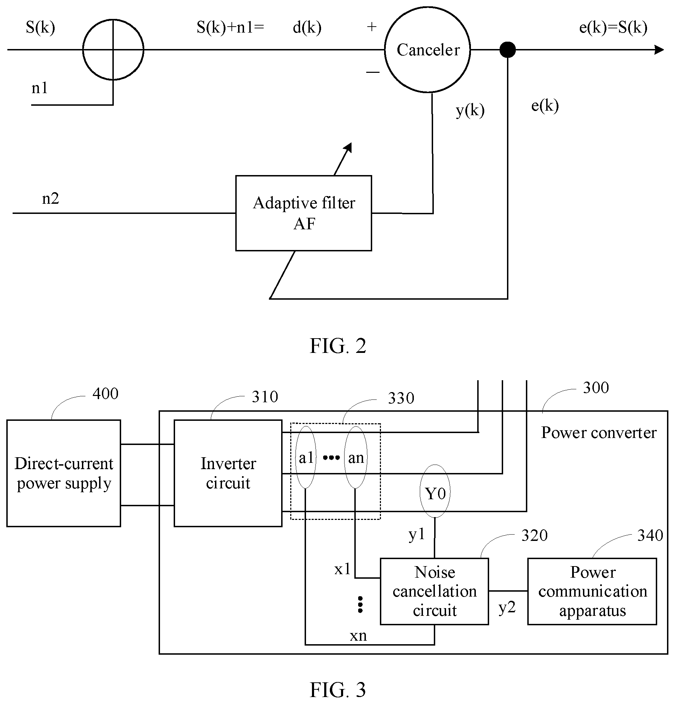

To resolve the foregoing problem, as shown in FIG. 2, an adaptive filter AF in a noise cancellation module 200 can be used to estimate noise generated by a noise source, and an estimated noise signal y(k) is subtracted from a desired signal d(k) including noise n1, to achieve an objective of noise cancellation. Input of the noise cancellation module 200 generally requires an original signal and a reference signal as input signals. The original signal is formed by a wanted signal s(k) and a noise signal n1 generated by a noise source, and the reference signal is a related noise signal n2 generated by the noise source. Through the adaptive filter AF, the estimated signal y(k) continuously approximates the noise signal n1 mixed in with the wanted signal, and then through a canceler A1, the estimated noise signal y(k) is subtracted from the original signal, thereby achieving an objective of noise cancellation. In the foregoing implementation process, a filter coefficient of the adaptive filter AF is determined by using a coefficient update algorithm, and the algorithm calculates an adjustment of each filter coefficient based on an error signal e(k). The error signal e(k) is generally calculated as a difference between an actual output signal y(k) of the adaptive filter AF and the desired signal d(k). An adaptive filtering algorithm changes the coefficient to minimize a mean square value of the error signal e(k). The following equation describes an execution process of a commonly used LMS algorithm:
1. Filtering: y(k)=X(k)*W(k);
2. Error estimation: e(k)=d(k)-y(k);
3. Filter coefficient update: g(k)=2e(k)x(k); W(k+1)=W(k)+u*g(k).

k is a quantity of times of iterations of the algorithm, y(k) is an output of the adaptive filter AF, X(k) is a group of vectors formed by input signals, W(k) is a filter coefficient vector of the adaptive filter AF, e(k) is an error signal, d(k) is a desired signal, u is a convergence factor (or a step size), and W(k+1) is a filtering tap weight of a next iteration. In this algorithm, g(k) is an important value, which is a projection of an estimated gradient or a current squared error signal. When the algorithm converges, g(k) is expected to be a very small value with a mean of zero.

In the foregoing manner, although noise can be canceled by using the adaptive filtering algorithm, the adaptive filter AF in the photovoltaic generation system is generally implemented by using a software algorithm, and a filter coefficient is iteratively updated entirely by using the adaptive filtering algorithm. As an order (step size parameter) of the adaptive filter increases, system stability decreases. This results in a limited improvement effect of a signal-to-noise ratio of a wanted signal in a PLC signal during actual use, failing to meet the demand of photovoltaic power stations with increasingly large scales.

To better resolve the foregoing problem, as shown in FIG. 3, an embodiment of this application provides a power converter 300. The power converter 300 includes an inverter circuit 310 and a noise cancellation circuit 320. A direct-current input terminal of the inverter circuit 310 is configured to be connected to a direct-current power supply 400. A three-phase alternating-current output terminal of the inverter circuit 310 is configured to be connected to a power transmission line. An input terminal of the noise cancellation circuit 320 is connected to a target coupling point Y0 of the power transmission line, and at least one group of reference signal input terminals (x1, ..., xn) of the noise cancellation circuit 320 is connected to at least one group of corresponding sampling points (a1 to an). Each group of sampling points in the at least one group of sampling points is disposed on a coupling path 330 between the target coupling point Y0 and the three-phase alternating-current output terminal of the inverter circuit 310. The direct-current power supply may be the photovoltaic power generation panel and the photovoltaic optimizer in FIG. 1, or the direct-current power supply is an energy storage battery. An output terminal of the noise cancellation circuit 320 may further be connected to a power communication apparatus 340. The noise cancellation circuit 320 can receive a first communication signal y1 from the target coupling point Y0. Then the noise cancellation circuit performs noise cancellation processing on the first communication signal y1 based on at least one reference signal obtained from the at least one group of sampling points, to obtain a noise-reduced second communication signal y2.

In the foregoing implementation, the noise cancellation circuit 320 can directly obtain the reference signal from the coupling path 330. Then, based on the obtained reference signals, noise cancellation processing is performed on the first communication signal received at the target coupling point Y0, thereby filtering out a noise signal generated by a noise source on the coupling path 330 to obtain the second communication signal, so as to increase a signal-to-noise ratio of a wanted signal in the second communication signal. Based on this, even if a transmission distance of the PLC signal is long, the signal-to-noise ratio of the wanted signal in the PLC signal can be increased with reference to the foregoing manner, thereby increasing the transmission distance of the PLC signal. In addition, the noise cancellation circuit 320 is independently disposed between the target coupling point Y0 and the power communication apparatus 340, which allows for better targeted design of the noise cancellation circuit 320 based on an actual requirement, thereby improving performance of the noise cancellation circuit 320.

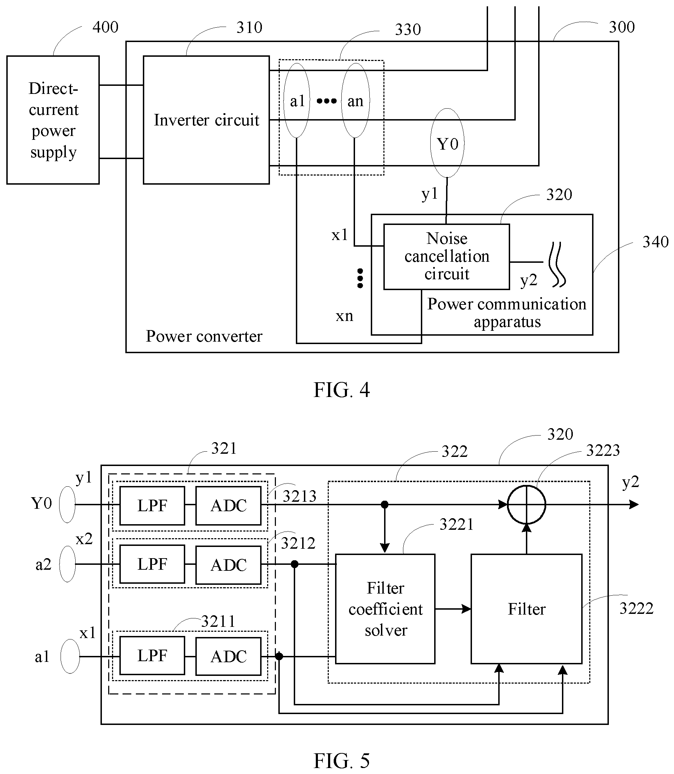

In an implementation solution, as shown in FIG. 4, when the power converter 300 further includes a power communication apparatus 340, the noise cancellation circuit 320 may alternatively be disposed within the power communication apparatus 340, and the input terminal of the noise cancellation circuit 320, serving as an input terminal of the power communication apparatus 340, is connected to the target coupling point Y0 of the power transmission line. In the foregoing manner, the noise cancellation circuit 320 can be integrated as an on-chip circuit into the power communication apparatus 340, thereby reducing a routing area and improving processing efficiency.

In a possible implementation solution, as shown in FIG. 5, the noise cancellation circuit 320 includes a sampling circuit 321 and an operational circuit 322. The sampling circuit 321 includes a first sampling sub-circuit 3211, a second sampling sub-circuit 3212, and a third sampling sub-circuit 3213. An input terminal of the first sampling sub-circuit 3211, serving as a first reference signal input terminal x1, is connected to a group of sampling points (denoted as sampling points a1) disposed close to the three-phase alternating-current output terminal of the inverter circuit 310 in the at least one group of sampling points. An input terminal of the second sampling sub-circuit 3212, serving as a second reference signal input terminal x2, is connected to a group of sampling points (denoted as sampling points a2) disposed close to the target coupling point Y0 in the at least one group of sampling points. Both an output terminal of the first sampling sub-circuit 3211 and an output terminal of the second sampling sub-circuit 3212 are connected to the operational circuit 322. The target coupling point Y0 is connected to the operational circuit 322 through the third sampling sub-circuit 3213. In the foregoing manner, noise cancellation processing can be performed on the first communication signal at the target coupling point Y0 through the operational circuit 322 based on reference signals at two terminals of the coupling path 330. In an example, the operational circuit 322 may include a filter coefficient solver 3221, a filter 3222, a canceler 3223, and the like. The filter coefficient solver 3221 can calculate a filter coefficient of the filter 3222 based on the two reference signals and the first communication signal. Then, the filter 3222 can filter the two reference signals based on the filter coefficient, to obtain a corresponding noise signal. Finally, the canceler 3223 can perform noise cancellation processing on the first communication signal based on the noise signal to eliminate the noise signal included in the first communication signal, to obtain a noise-reduced second communication signal. The first sampling sub-circuit 3211, the second sampling sub-circuit 3212, and the third sampling sub-circuit 3213 each may include a low-pass filter (low-pass filter, LPF) and an analog-to-digital converter ADC that are cascaded. A signal of each sampling point may be first filtered through the low-pass filter LPF, and then converted into a digital signal through the ADC. Then, the operational circuit 322 performs, based on digital signals corresponding to the two reference signals, noise cancellation processing on a digital signal corresponding to the first communication signal. In the foregoing manner, filtering processing may be performed on the reference signal, and then the reference signal is converted into a digital signal to perform a subsequent processing process. The digital signal has a stronger anti-interference capability, which can make a subsequent processing result more accurate.

Further, the low-pass filter LPF may be a low-pass filter provided with an isolation circuit, so as to safely isolate the noise cancellation circuit 320 from the power transmission line, thereby preventing a signal transmitted on the power transmission line from interfering with a signal of the noise cancellation circuit 320.

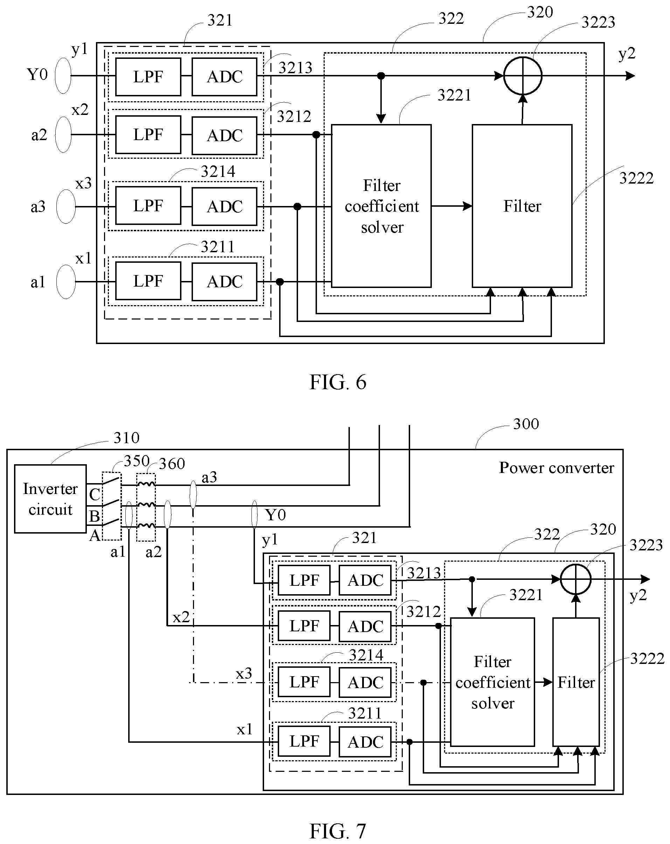

In an implementation solution, as shown in FIG. 6, the noise cancellation circuit 320 includes a sampling circuit 321 and an operational circuit 322. The sampling circuit 321 includes a first sampling sub-circuit 3211, a second sampling sub-circuit 3212, a third sampling sub-circuit 3213, and a fourth sampling sub-circuit 3214. An input terminal of the first sampling sub-circuit 3211, serving as a first reference signal input terminal x1, is connected to a group of sampling points (denoted as sampling points a) disposed close to the three-phase alternating-current output terminal in the at least one group of sampling points. An input terminal of the second sampling sub-circuit 3212, serving as a second reference signal input terminal x2, is connected to a group of sampling points (denoted as sampling points b) disposed close to the target coupling point Y0 in the at least one group of sampling points. Both an output terminal of the first sampling sub-circuit 3211 and an output terminal of the second sampling sub-circuit 3212 are connected to the operational circuit. The target coupling point Y0 is connected to the operational circuit 322 through the third sampling sub-circuit 3213. An input terminal of the fourth sampling sub-circuit 3214, serving as a third reference signal input terminal x3, can be connected to a group of sampling points (denoted as sampling points c) between the sampling points a and the sampling points b. In an example, the operational circuit 322 may include a filter coefficient solver 3221, a filter 3222, a canceler 3223, and the like. The filter coefficient solver 3221 can calculate a filter coefficient of the filter based on the three reference signals and the first communication signal. Then, the filter 3222 can filter the three reference signals based on the filter coefficient, to obtain a corresponding noise signal. Finally, the canceler 3223 can perform noise cancellation processing on the first communication signal based on the noise signal to eliminate the noise signal included in the first communication signal, to obtain a noise-reduced second communication signal. The first sampling sub-circuit 3211, the second sampling sub-circuit 3212, the third sampling sub-circuit 3213, and the fourth sampling sub-circuit 3214 may also include a low-pass filter and an ADC. Details are not described in embodiments of this application.

In the foregoing implementation process, the filter coefficient solver 3221, the filter 3222, and the canceler 3223 may be software functional modules, or may be circuits disposed on a chip. This is not specifically limited in embodiments of this application.

For example, the filter coefficient solver 3221 can directly calculate a corresponding Wiener solution based on the at least one reference signal by using an adaptive filtering algorithm, to determine a filter coefficient of the filter 3222 for each reference signal. For a single reference signal, a Wiener solution of the reference signal is calculated as follows: A vector X(n) of a single reference signal may be represented as: $X \left(n\right) = {\left[x\left(n\right)x\left(n-1\right)…x\left(n-L\right)\right]}^{T} ;$

x(n) to x(n-L) represent sampling values of a single reference signal at L+1 moments.

An output signal y(n) is: $y \left(n\right) = {\sum }_{k = 0}^{L} {w}_{k} \left(n\right) x \left(n-k\right) ;$

L+1 weight coefficients w₀(n) to w_{L}(n) of an adaptive linear combiner form a weight coefficient vector, which is referred to as a weight vector and is represented by W(n), that is, $W \left(n\right) = {\left[{w}_{0}\left(n\right){w}_{1}\left(n\right)…{w}_{L}\left(n\right)\right]}^{T} ;$

Therefore, y(n) may be expressed as: $y \left(n\right) = {X}^{T} \left(n\right) W \left(n\right) = {W}^{T} \left(n\right) X \left(n\right) ;$

An error signal e(n) is: $e \left(n\right) = d \left(n\right) - y \left(n\right) = d \left(n\right) - {X}^{T} \left(n\right) W \left(n\right) = d \left(n\right) - {W}^{T} \left(n\right) X \left(n\right) ;$

X^{T}(n) represents a transpose of X(n), W^{T}(n) represents a transpose of W(n), and d(n) represents a desired signal.

The adaptive linear combiner follows a criterion of minimum mean square value of an error signal ξ(n), that is: $ξ \left(n\right) = E \left[{e}^{2}\left(n\right)\right] = E \left[{d}^{2}\left(n\right)\right] + {W}^{T} \left(n\right) E \left[X\left(n\right){X}^{T}\left(n\right)\right] W \left(n\right) - 2 E \left[d\left(n\right){X}^{T}\left(n\right)\right] W \left(n\right) ;$

An autocorrelation matrix of an input signal x(n) is: $\begin{matrix}R = E \left[X\left(n\right){X}^{T}\left(n\right)\right] = \\ \left[\begin{matrix}E \left[x\left(n\right)x\left(n\right)\right] & E \left[x\left(n\right)x\left(n-1\right)\right] … & E \left[x\left(n\right)x\left(n-L\right)\right. \\ E \left[x\left(n-1\right)x\left(n\right)\right] & E \left[x\left(n-1\right)x\left(n-1\right)\right] … & E \left[x\left(n-1\right)x\left(n-L\right)\right] \\ E \left[x\left(n-L\right)x\left(n\right)\right] & E \left[x\left(n-L\right)x\left(n-1\right)\right] … & E \left[x\left(n-L\right)x\left(n-L\right)\right]\end{matrix}\right] ;\end{matrix}$

E[.] represents a mean vector.

A cross-correlation matrix between the desired signal d(n) and the reference signal is: $P = E \left[d\left(n\right)X\left(n\right)\right] = \left.E\left[d\left(n\right)x\left(n\right)\right]d\left(n\right)x\left(n-1\right)…d\left(n\right)x\left(n-L\right)\right] ;$

A simple representation form of a mean square error ξ(n) is: $ξ \left(n\right) = E \left[{d}^{2}\left(n\right)\right] + {W}^{T} RW - 2 {P}^{T} W ;$

P^{T} represents a transpose of P, W^{T} is the foregoing W^{T}(n), and W is the foregoing W(n). It can be learned from this formula that, under a premise that both the input signal and the reference signal are stationary random signals, the mean square error is a quadratic function of each component of the weight vector. A graph of this function is a hyperparaboloid that is concave in the middle in (L+2)-dimension space with a unique lowest point. The surface is referred to as a mean square error performance surface, or simply a performance surface.

Gradient of the mean square error performance surface: $∇ = \frac{\partial ξ}{\partial W} = 2 RW - 2 P ;$

By setting the gradient ∇ to zero, an optimal weight vector or Wiener solution W∗ corresponding to a minimum mean square error can be obtained, and W∗=R⁻¹P is obtained.

Further, when a plurality of reference signals are input, a vector X(n) of the plurality of reference signals may be represented as: X(n)=[x₀(n)x₁(n)...x_{L}(n)]^{T}, where x₀(n) to x_{L}(n) represent sampling values of L+1 reference signals at a same moment. In this case, for a method of calculating the optimal weight vector or the Wiener solution W∗ corresponding to the minimum mean square error, refer to the foregoing process. Details are not described in embodiments of this application.

In an implementation solution, when input of the filter coefficient solver 3221 is a plurality of reference signals, a Wiener solution (that is, a filter coefficient) of each reference signal may be separately solved with reference to the foregoing method, and then each reference signal is filtered based on the Wiener solution of each reference signal to obtain a noise signal. Finally, noise cancellation processing is performed on the first communication signal through the canceler based on each noise signal. Certainly, when input of the filter coefficient solver 3221 is a plurality of reference signals, Wiener solutions of the plurality of reference signals may alternatively be calculated by using the adaptive filtering algorithm, and then a plurality of input signals are filtered based on the Wiener solutions to obtain a noise signal. Finally, noise cancellation processing is performed on the first communication signal based on the noise signal.

In an implementation solution, the filter coefficient of the filter 3222 can be first trained by using a part of training data to obtain an initial filter coefficient. Then, noise cancellation processing is performed on a subsequent communication signal based on the filter coefficient. A controller may be used to monitor signal quality of a noise-reduced signal output from the output terminal of the noise filtering circuit 320, for example, monitor a signal-to-noise ratio of the noise-reduced signal. Then, when the signal quality is lower than a quality threshold, an updated filter coefficient is obtained through retraining based on a part of data. In this manner, an intermittent training manner can be used based on a characteristic of a slow change of noise of the inverter circuit, to reduce processing complexity and improve real-time performance.

In the photovoltaic generation system, a noise source on the coupling path 330 between the target coupling point Y0 and the three-phase alternating-current output terminal of the inverter circuit 310 generally includes a differential mode inductor, a common mode inductor, a switching device, and the like. A quantity of noise sources may be determined based on a quantity of the foregoing components actually used on the coupling path 330. In addition, a quantity of the at least one group of sampling points may be determined based on the quantity of noise sources on the coupling path 330. In an implementation solution, as shown in FIG. 7, if the differential mode inductor 360 and the switching device 350 that are cascaded are disposed on the coupling path 330 between the target coupling point Y0 and the three-phase alternating-current output terminal, two groups of sampling points may be disposed on the coupling path 330, including sampling points a1 and sampling points a2. The sampling point a1 may be disposed at an output terminal of the switching device 350, and the sampling point a2 may be disposed at an output terminal of the differential mode inductor 360. A first reference signal input terminal of the noise cancellation circuit 320 may be connected to the sampling point a1, and a second reference signal input terminal of the noise cancellation circuit 320 may be connected to the sampling point a2. The noise cancellation circuit 320 can perform, based on two reference signals obtained by the two groups of sampling points, noise cancellation processing on the first communication signal received at the target coupling point Y0, to obtain a noise-reduced second communication signal.

In the foregoing implementation process, the sampling point a1 and the sampling point a2 may be configured based on a configuration manner of the target coupling point Y0. For example, when the coupling path 330 between the target coupling point Y0 and the three-phase alternating-current output terminal of the inverter circuit 310 uses a three-phase power transmission line, the target coupling point Y0 may be connected to any two phases of the three-phase power transmission line. In this case, the sampling point a1 and the sampling point a2 may also be disposed on any two phases of the three-phase power transmission line. For example, still as shown in FIG. 7, when the target coupling point Y0 is disposed on a phase A and a phase B of the three-phase power transmission line, the sampling point a1 and the sampling point a2 may also be disposed on the phase A and the phase B of the three-phase power transmission line. Certainly, when the target coupling node is disposed on a specific phase power transmission line in the three-phase power transmission line, the sampling point a1 and the sampling point a2 are also disposed on a corresponding power transmission line. This is not specifically limited in embodiments of this application.

It may be understood that the foregoing implementation is merely an example implementation solution provided in embodiments of this application. During specific implementation, a configuration manner of sampling points may be adaptively adjusted based on a coupling manner of the target coupling point Y0. This is not specifically limited in embodiments of this application.

In an implementation solution, still as shown in FIG. 7, a sampling point a3 may be further disposed on a phase B and a phase C of a three-phase power transmission line at an output terminal of each noise source, and the sampling point a3 may be connected to the operational circuit 322 in the noise cancellation circuit 320 through a sampling circuit. Through the sampling point a3, a signal between the power transmission line serving as a transmission line of the PLC signal and another power transmission line in the coupling path 330 can be transmitted as a reference signal to the noise cancellation circuit 320 for processing, thereby eliminating interference caused by an interference noise between power transmission lines to the communication signal.

It may be understood that the foregoing configuration manner of the sampling point is merely an example provided in embodiments of this application. During specific implementation, an operator may perform targeted configuration based on a noise source that may be included in an actual circuit structure between the three-phase alternating-current output terminal of the inverter circuit 310 and the target coupling point Y0. Details are not described in embodiments of this application.

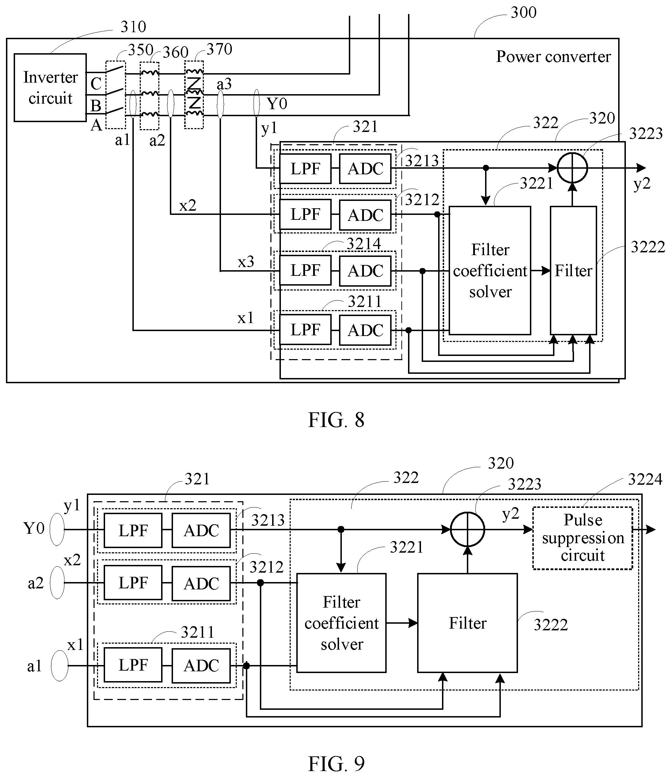

In an implementation solution, as shown in FIG. 8, if a differential mode inductor 360, a common mode inductor 370, and a switching device 350 that are cascaded are disposed on the coupling path 330 between the target coupling point Y0 and the three-phase alternating-current output terminal of the inverter circuit 310, three groups of sampling points may be disposed on the coupling path 330, including sampling points a1, sampling points a2, and sampling points a3. The sampling point a1 may be disposed at an output terminal of the switching device 350, and the sampling point a2 may be disposed at an output terminal of the differential mode inductor 360. The sampling point a3 may be disposed at an output terminal of the common mode inductor 370. A first reference signal input terminal of the noise cancellation circuit 320 may be connected to the sampling point a1, and a second reference signal input terminal of the noise cancellation circuit 320 may be connected to the sampling point a2. A third reference signal input terminal of the noise cancellation circuit 320 may be connected to the sampling point a3. The sampling point a1, the sampling point a2, and the sampling point a3 may be disposed on the coupling path 330 with reference to a configuration manner of the target coupling point Y0. Details are not described in embodiments of this application.

It may be understood that, when there is another device that may generate noise between the target coupling point Y0 and the three-phase alternating-current output terminal of the inverter circuit 310, a sampling point and a corresponding sampling circuit may be further disposed at a corresponding noise source, so that the operational circuit can be fully used to perform, based on a reference signal at the noise source, noise cancellation processing on the first communication signal received at the target coupling point Y0, thereby further improving a signal-to-noise ratio of a wanted signal in the PLC signal.

In an implementation solution, based on FIG. 3, as shown in FIG. 9, the noise cancellation circuit 320 may further include a pulse suppression circuit 3224. The pulse suppression circuit 3224 can eliminate a pulse signal whose pulse strength exceeds a strength threshold in the second communication signal, so as to obtain a third communication signal whose pulse strength better satisfies a requirement. A strength threshold of the pulse suppression circuit 3224 can be set based on an actual requirement. This is not specifically limited in embodiments of this application.

It may be understood that, although the pulse suppression circuit 3224 in the foregoing embodiment is based on FIG. 3, in actual implementation, the power converter 300 may be the power converter 300 in any possible implementation solution in FIG. 3 to FIG. 9.

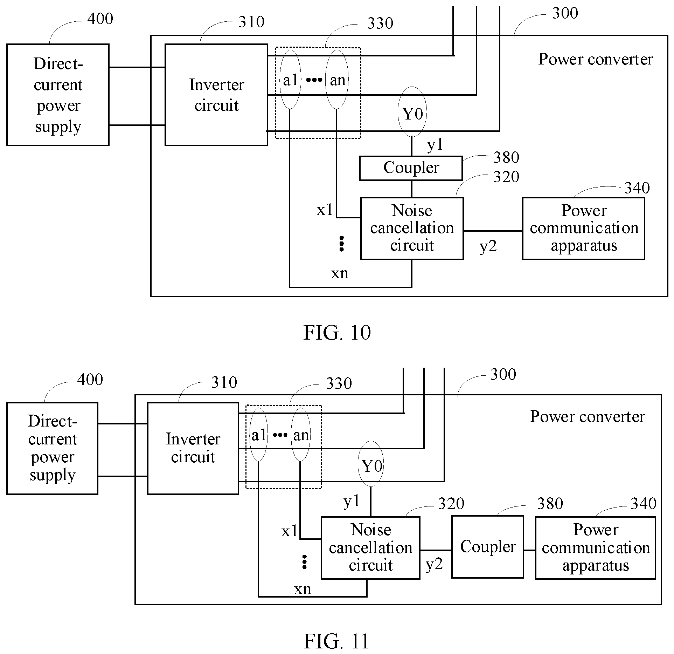

In an implementation solution, based on FIG. 3, as shown in FIG. 10, the power converter 300 may further include a coupler 380. The input terminal of the noise cancellation circuit 320 is connected to the target coupling point Y0 through the coupler 380. The power transmission line can be isolated from the noise cancellation circuit 320 through the coupler, thereby preventing a signal on the power transmission line from interfering with a signal in the noise cancellation circuit 320. In an example, the foregoing coupler may be a transformer, and the transformer can transform a voltage of a transmitted signal while implementing isolation between the power transmission line and the noise cancellation circuit 320, thereby preventing an excessively high signal voltage from affecting the noise cancellation circuit 320 and the power communication apparatus 340.

It may be understood that, although the coupler in the foregoing embodiment is based on FIG. 3, in actual implementation, the power converter 300 may be the power converter 300 in any possible implementation solution in FIG. 3 to FIG. 9.

In an implementation solution, based on FIG. 3, as shown in FIG. 11, the power converter 300 may further include a coupler 380. The output terminal of the noise cancellation circuit 320 is connected to the input terminal of the power communication apparatus 340 through the coupler 380. The power communication apparatus 340 is configured to process a noise-canceled power communication signal. In the foregoing manner, noise cancellation processing may be first performed on the first communication signal at the target coupling point Y0 through the noise cancellation circuit 320, and then voltage transformation and isolation protection may be performed through the coupler, so as to avoid mutual impact between signals of the noise cancellation circuit 320 and the power communication apparatus 340.

It may be understood that, although the coupler in the foregoing embodiment is based on FIG. 3, in actual implementation, the power converter 300 may be the power converter 300 in any possible implementation solution in FIG. 3 to FIG. 9.

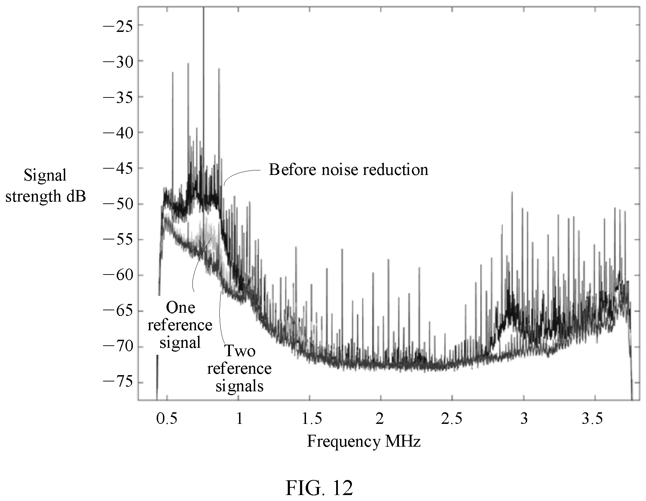

In an implementation solution, to verify a noise reduction effect of the power converter 300 provided in embodiments of this application, in embodiments of this application, a noise reduction amount of the power converter is further tested by using a single reference signal and two reference signals. A test result of the test is shown in FIG. 12. It can be learned from FIG. 12 that when noise cancellation processing is performed on the communication signal at the target coupling node by using the single reference signal, a noise reduction amount in a frequency band of 0.5 MHz to 3.7 MHz is approximately 10.4 dB. When noise cancellation processing is performed on the communication signal at the target coupling node by using the two reference signals, a noise reduction amount in a frequency band of 0.5 MHz to 3.7 MHz is approximately 11 dB. It can be learned that the power converter 300 provided in this application can improve a noise reduction effect of the PLC signal, thereby increasing a transmission distance of the PLC signal.

The controller and the operational circuit involved in embodiments of this application may be a chip. For example, the chip may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a digital signal operational circuit (digital signal processor, DSP), a microcontroller unit (microcontroller unit, MCU), a programmable controller (programmable logic device, PLD), or another integrated chip.

A memory involved in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

In several embodiments provided in this application, it should be understood that the disclosed system, circuit, and component may be implemented in other manners. For example, the described component embodiment is merely an example. For example, division into circuits and modules is merely division into logical functions and may be other division during actual application. For example, a plurality of circuits or assemblies may be combined or may be integrated into another device, or some features may be ignored or not performed. In addition, the displayed or discussed mutual couplings or direct couplings or communication connections may be implemented through some interfaces. The indirect couplings or communication connections between the devices or circuits may be implemented in electronic, mechanical, or other forms.

The circuits described as separate parts may or may not be physically separate, and parts displayed as circuits may or may not be physical circuits, may be located in one device, or may be distributed in a plurality of devices. Some or all of the circuits may be selected based on an actual requirement to achieve the objectives of the schemes of embodiments.

In addition, functional circuits in embodiments of this application may be integrated into one device, each of the circuits may exist alone physically, or two or more circuits may be integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising: an inverter circuit and a noise cancellation circuit, wherein a direct-current input terminal of the inverter circuit is configured to be connected to a direct-current power supply, and a three-phase alternating-current output terminal of the inverter circuit is configured to be connected to a power transmission line; an input terminal of the noise cancellation circuit is connected to a target coupling point of the power transmission line, and at least one group of reference signal input terminals of the noise cancellation circuit is connected to at least one group of corresponding sampling points; and each group of sampling points in the at least one group of sampling points is disposed on a coupling path between the target coupling point and the three-phase alternating-current output terminal, wherein the noise cancellation circuit is configured to:
receive a first communication signal from the target coupling point; and
perform noise cancellation processing on the first communication signal based on at least one reference signal obtained from the at least one group of sampling points, to obtain a noise-reduced second communication signal.

2. The power converter according to claim 1, wherein a quantity of the at least one group of sampling points is determined based on a quantity of noise sources on the coupling path.

3. The power converter according to claim 2, wherein the noise source comprises at least one of a differential mode inductor, a common mode inductor, or a switching device disposed on the coupling path.

4. The power converter according to claim 2 or 3, wherein the at least one group of sampling points is disposed at the noise source.

5. The power converter according to any one of claims 1 to 4, wherein the noise cancellation circuit comprises an operational circuit and a sampling circuit, and an input terminal of the operational circuit is connected to the target coupling point and the at least one group of sampling points through the sampling circuit.

6. The power converter according to any one of claims 2 to 5, wherein the sampling circuit comprises a first sampling sub-circuit, a second sampling sub-circuit, and a third sampling sub-circuit; an input terminal of the first sampling sub-circuit, serving as a first reference signal input terminal, is connected to a group of sampling points disposed close to the three-phase alternating-current output terminal in the at least one group of sampling points; an input terminal of the second sampling sub-circuit, serving as a second reference signal input terminal, is connected to a group of sampling points disposed close to the target coupling point in the at least one group of sampling points; both an output terminal of the first sampling sub-circuit and an output terminal of the second sampling sub-circuit are connected to the operational circuit; and the target coupling point is connected to the operational circuit through the third sampling sub-circuit.

7. The power converter according to claim 6, wherein the first sampling sub-circuit, the second sampling sub-circuit, and the third sampling sub-circuit each comprise a low-pass filter and a digital-to-analog converter that are cascaded.

8. The power converter according to claim 7, wherein the low-pass filter is a low-pass filter provided with an isolation circuit.

9. The power converter according to any one of claims 5 to 8, wherein the noise cancellation circuit further comprises a pulse suppression circuit; an input terminal of the pulse suppression circuit is connected to an output terminal of the operational circuit; and the pulse suppression circuit is configured to eliminate a pulse signal whose strength exceeds a strength threshold in the second communication signal to obtain a third communication signal.

10. The power converter according to any one of claims 1 to 9, further comprising: a coupler, wherein the input terminal of the noise cancellation circuit is connected to the target coupling point through the coupler, or the coupler is connected to an output terminal of the noise cancellation circuit.

11. The power converter according to any one of claims 1 to 10, wherein the power converter further comprises a power communication apparatus, the noise cancellation circuit is disposed within the power communication apparatus, and the input terminal of the noise cancellation circuit, serving as an input terminal of the power communication apparatus, is connected to the target coupling point of the power transmission line.

12. The power converter according to any one of claims 1 to 10, wherein the power converter further comprises a power communication apparatus; and the output terminal of the noise cancellation circuit is connected to an input terminal of the power communication apparatus.

13. A photovoltaic generation system, comprising one or more power converters according to any one of claims 1 to 12 and a data collector, wherein the one or more power converters are configured to communicate with the data collector through the power transmission line.

14. A photovoltaic generation system, comprising the power converter according to any one of claims 1 to 12 and one or more photovoltaic optimizers, wherein the power converter is configured to communicate with the one or more photovoltaic optimizers through the power transmission line, and each photovoltaic optimizer in the one or more photovoltaic optimizers is configured to be connected to a photovoltaic power generation panel.
